# EUROPÄISCHE PATENTSCHRIFT

(11) **EP 3 390 111 B1**
(45) Veröffentlichungstag und Bekanntmachung des Hinweises auf die Patenterteilung: **26.02.2020**
(21) Anmeldenummer: 16770919.5
(22) Anmeldetag: 21.09.2016
(51) Int. Cl.: B60C 11/13

(54) **FAHRZEUGLUFTREIFEN**
PNEUMATIC VEHICLE TIRE
PNEU DE VÉHICULE

(30) Priorität: 18.12.2015 DE 102015225941
(43) Veröffentlichungstag der Anmeldung: 24.10.2018
(73) Patentinhaber: Continental Reifen Deutschland GmbH, 30165 Hannover (DE)
(72) Erfinder: BEHR, Ulrich, 30167 Hannover (DE); GLÄSER, Björn-Birk, Monroe North Carolina 28112 (US); TEMES, Blanca, Sara, 30449 Hannover (DE); SCHÜRMANN, Oliver, 30855 Langenhagen (DE); NETTE, Daniel, 30890 Barsinghausen (DE); DOMSCHEIT, Andreas, 30459 Hannover (DE)
(74) Vertreter: Finger, Karsten
(86) Internationale Anmeldenummer: PCT/EP2016/072402
(87) Internationale Veröffentlichungsnummer: WO 2017/102120

(56) Entgegenhaltungen:
- DE-A1-102006 031 779
- JP-A- 2006 056 480
- JP-A- 2010 254 146
- JP-A- 2014 094 645

## Beschreibung

Die Erfindung betrifft einen Fahrzeugluftreifen mit einem Laufstreifen mit zumindest einer Profilpositive, wie Profilrippen oder Profilblockreihen, begrenzenden Umfangsrille, welche zwischen den Profilpositiven durch einen Rillengrund und zwei einander gegenüberliegende Rillenflanken begrenzt ist und auf deren Rillengrund eine Anzahl von in Umfangsrichtung voneinander beabstandeten, als Schallbrecher wirkende Erhebungen ausgebildet ist.

Es ist bekannt, dass sich während des Fahrbetriebes in Umfangsrillen von Laufstreifen von Fahrzeugluftreifen Schallwellen bilden, deren Frequenzen in einem hörbaren Bereich von ca. 1000 Hz liegen. Diese Schallwellen breiten sich entlang der Umfangsrillen von Laufstreifen meist ungehindert aus, wodurch während des Fahrbetriebes unangenehm wahrnehmbare und störende Fahrgeräusche entstehen. Um dem entgegenzuwirken, ist es bekannt und auch üblich, innerhalb von Umfangsrillen des Laufstreifens eines Fahrzeugluftreifens aus dem Gummimaterial des Laufstreifens mitgebildete zusätzliche Elemente, sogenannte Schallbrecher, auszubilden, welche die Ausbreitung von Schallwellen derart stören, dass die Fahrgeräusche reduziert sind.

Ein Reifen der eingangs genannten Art ist beispielsweise aus der EP 2 406 088 B1 bekannt. Der Laufstreifen dieses Reifens weist Umfangsrillen mit am Rillengrund ausgebildeten Erhebungen, die als Schallbrecher wirken, auf. Jede Erhebung setzt sich aus wenigstens zwei sich in Umfangsrichtung erstreckenden und in axialer Richtung aneinander anschließenden Erhebungsabschnitten zusammen, die derart ausgebildet sind, dass sie über ihre Erstreckungslänge einen axialen Abstand zu den Rillenflanken aufweisen. Auf diese Weise sollen freie Durchgangskanäle zwischen den Erhebungen und den Rillenflanken vorhanden bleiben. Bei einer alternativen Ausführungsform ist einer dieser Erhebungsabschnitte über seine gesamte Länge an eine der Rillenflanken angebunden bzw. mit dieser verbunden.

Aus der JP 2010 254 146 A ist ein Fahrzeugluftreifen mit einem Laufstreifen bekannt, in dessen Umfangsrillen als Schallabsorber wirkende Einsätze eingebaut sind. Die Einsätze sind zweiteilig ausgeführt und weisen einen Befestigungsteil auf, in welchen ein Schallabsorptionskörper eingesetzt ist. Der Befestigungsteil besteht beispielsweise aus Metall oder Hartgummi, der Schallabsorptionskörper besteht beispielsweise aus Schaumstoff oder einem Vlies, dessen Fasern insbesondere Aramid- oder Polyesterfasern sind.

Die DE 10 2006 031 779 A1 offenbart einen Fahrzeugluftreifen mit einem Laufstreifen mit Rillen, von welchen zumindest eine einen Rillenabschnitt aufweist, in welchem eine der Rillenflanken unter einem Winkel von mindestens 15° zur radialen Richtung verläuft. In diesem Rillenabschnitt sind in einem Abstand zu dieser Rillenflanke und quer zur Längserstreckung der Rille ausgerichtete und in der Längserstreckung der Rille voneinander beabstandete Stege ausgebildet. Diese Maßnahmen sollen die Traktionseigenschaften auf Schnee verbessern.

Aus der JP 2014 094 645 A ist ferner ein Fahrzeugluftreifen mit einem Laufstreifen bekannt, welcher im Kreuzungsbereich von Umfangs- und Querrillen am Rillengrund ausgebildete und freistehende Erhebungen aufweist, welche beim Fahren auf nasser Fahrbahn Wasseraus der Umfangsrille in die Querrille leiten soll.

Ferner ist aus der JP 2006 056 480 A ein Fahrzeugluftreifen mit einem Laufstreifen mit Umfangsrillen bekannt, auf deren Rillengrund in Draufsicht parallelogramm- oder deltoidartige, freistehende Erhebungen ausgebildet sind, welche als Schallbrecher und als "Steineauswerfer" wirken sollen.

Der Erfindung liegt die Aufgabe zugrunde, die in einer Umfangsrille des Laufstreifens eines Fahrzeugluftreifens als Schallbrecher wirkenden Erhebungen besonders stabil und mit möglichst geringem Volumen auszugestalten, wobei sie weiterhin eine gute Wirkung als Schallbrecher aufweisen sollen und das Wasserdrainagevermögen der Umfangsrillen weitgehend nicht beeinträchtigen sollen.

Gelöst wird die gestellte Aufgabe erfindungsgemäß dadurch, dass die Erhebungen jeweils einen zumindest im Wesentlichen mittig am Rillengrund positionierten zylindrischen Basisteil aufweisen, von welchem strahlenförmig vier Stabilisierungsstege entlang des Rillengrundes verlaufen, wobei jeweils zwei Stabilisierungsstege einander diametral gegenüberliegen, und wobei die einen einander diametral gegenüberliegenden Stabilisierungsstege im Wesentlichen in der Umfangsrichtung der Umfangsrille verlaufen und die anderen einander diametral gegenüberliegenden Stabilisierungsstege im Wesentlichen in axialer Richtung verlaufen und zumindest einer dieser im Wesentlichen in axialer Richtung verlaufenden Stabilisierungsstege bis zu einer Rillenflanke verläuft und mit dieser verbunden ist.

Erfindungsgemäß ausgeführte, als Schallbrecher wirkende Erhebungen sind relativ kleinvolumig ausführbar, sodass sie zwar die Ausbreitung der Schallwellen in den Umfangsrillen wirkungsvoll behindern, jedoch weiterhin der Umfangsrille ein gutes Wasserdrainagevermögen ermöglichen. Die Stabilisierungsstege behindern zudem wirkungsvoll das Entstehen von Einrissen im Bereich der Anbindungsstellen des Schallbrechers zum Rillengrund.

Der zylindrische Basisteil der Erhebungen ist vorrangig für die Wirkung der Erhebungen als Schallbrecher verantwortlich. Die Stabilisierungsstege sollen vor allem dafür sorgen, den Basisteil zu stabilisieren und einen ungehinderten Durchfluss von Wasser durch die Umfangsrillen zu ermöglichen. In diesem Zusammenhang ist es vorteilhaft, wenn die beiden im Wesentlichen in der Umfangsrichtung der Umfangsrille verlaufenden Stabilisierungsstege unter einem Winkel von bis zu 30°, vorzugsweise von 15° bis 25°, zur Umfangsrichtung verlaufen und bevorzugt eine Erstreckungslänge von 1,5 mm bis 2,5 mm aufweisen. Eine weitere, diesbezüglich vorteilhafte Maßnahme besteht darin, dass die beiden im Wesentlichen in axialer Richtung verlaufenden Stabilisierungsstege entlang eines Kreisbogens mit einem Radius von 6,0 mm bis 8,0 mm verlaufen.

Ein möglichst verwirbelungsfreies Durchströmen von Wasser durch die Umfangsrillen wird durch weitere, erfindungsgemäße Merkmale unterstützt. Zu diesen Merkmalen gehört, dass der Basisteil einen kuppelartig gestalteten Oberteil, einen Durchmesser von 4,0 mm bis 6,0 mm und eine Höhe von 3,0 mm bis 4,0 mm aufweist.

Bei einer weiteren bevorzugten Ausführungsvariante sind an der Außenseite des Basisteils zwischen den im Wesentlichen in der Umfangsrichtung der Umfangsrille und den im Wesentlichen in axialer Richtung verlaufenden Stabilisierungsstegen Stufen mit Stufenflächen ausgebildet, die parallel zur Laufstreifenaußenfläche verlaufen und sich in einer Höhe, von der tiefsten Stelle des Rillengrundes ermittelt, befinden, die der gesetzlichen Mindestprofiltiefe entspricht. Die Stufen erfüllen somit die Funktion von Tread Wear Indikatoren.

Besonders effektiv ist die Wirkung der Erhebungen als Schallbrecher bei einer Ausführung, bei der die Anzahl der Erhebungen in jeder Umfangsrille des Laufstreifens derart gewählt ist, dass sich pro Umfangsrille innerhalb der Aufstandsfläche des Reifens in jeder Drehlage zumindest eine Erhebung befindet. Die Anzahl der Erhebungen in jeder Umfangsrille des Laufstreifens beträgt daher vorteilhafter Weise zwölf bis zwanzig, insbesondere siebzehn.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 und Fig. 2 je eine Ansicht einer Ausführungsvariante eines in einer Umfangsrille eines Laufstreifens eines Fahrzeugluftreifens positionierten Schallbrechers,
Fig. 3 eine Vorderansicht des Schallbrechers gemäß Fig. 1 als Sicht in die Umfangsrille,
Fig. 4 eine Draufsicht auf den Schallbrecher gemäß Fig. 1.

Die Erfindung befasst sich mit speziell gestalteten, in Umfangsrillen von Laufstreifen von Fahrzeugluftreifen in Radialbauart, insbesondere von PKW-, Van- oder Light-Truck-Reifen, positionierten, als Schallbrecher wirkenden lokalen Erhebungen 4, welche in einer Umfangsrille 1 derart verteilt angeordnet sind, dass sich im Fahrbetrieb - beim Abrollen des Reifens - zumindest jeweils eine Erhebung 4 in der Bodenaufstandsfläche des Reifens befindet. In einer Umfangsrille 1 sind daher jeweils zwölf bis zwanzig, insbesondere sechszehn bis achtzehn, Erhebungen 4 ausgebildet, welche voneinander im Wesentlichen gleich große Abstände aufweisen können, deren Abstände jedoch auch variieren können. In einander benachbarten Umfangsrillen 1 angeordnete Erhebungen 4 sind in Umfangsrichtung vorzugsweise gegeneinander versetzt.

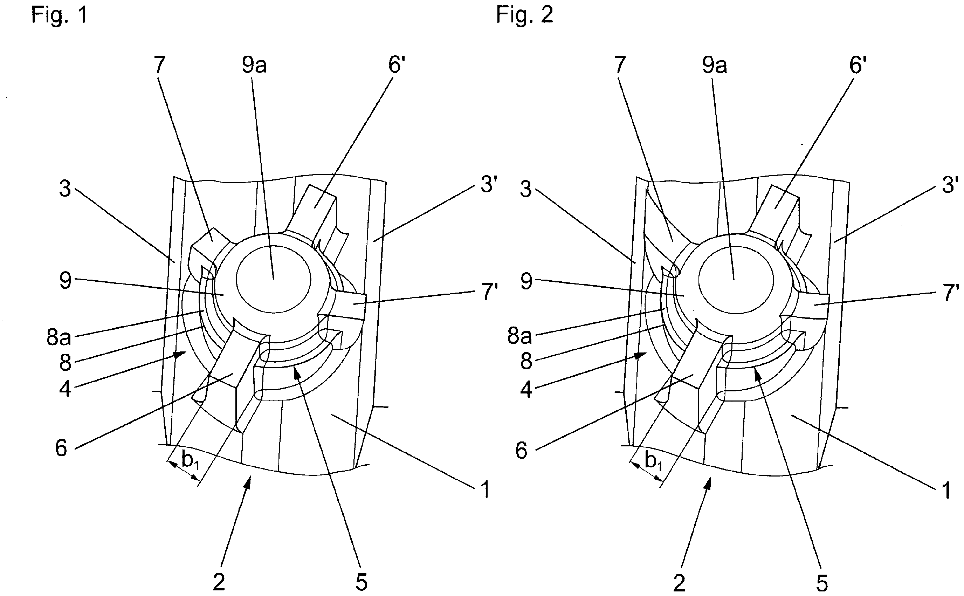

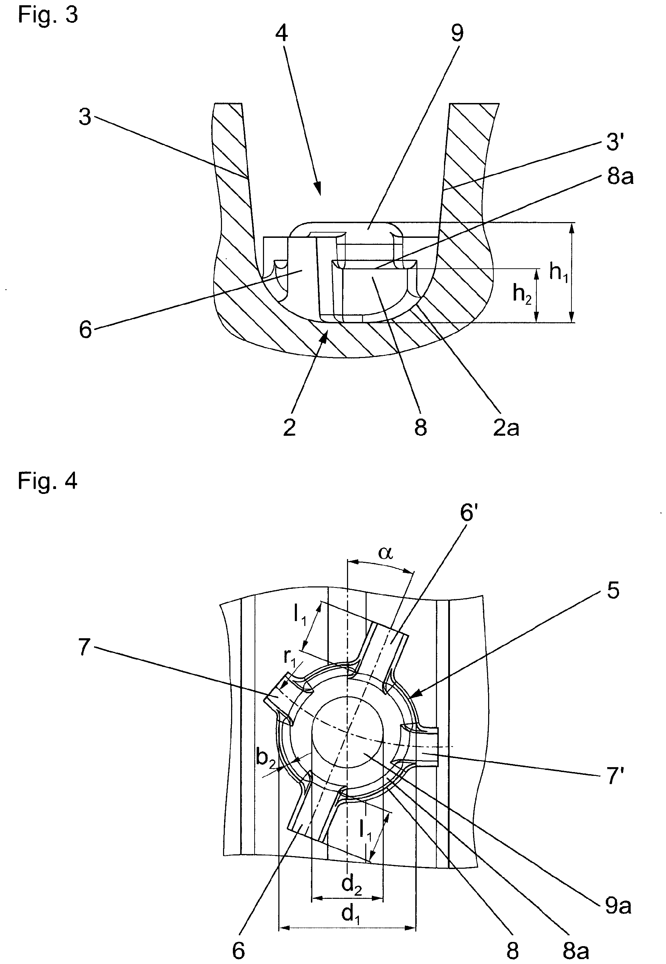

Fig. 1 und Fig. 2 zeigen jeweils einen Umfangsabschnitt einer im Querschnitt etwa V-förmigen Umfangsrille 1, welche durch einen Rillengrund 2 und zwei Rillenflanken 3, 3' begrenzt ist, sowie eine in der Umfangsrille 1 positionierte Erhebung 4. Der Rillengrund 2 ist bei der gezeigten Variante gerundet ausgeführt und weist ausgeprägte, zu den Rillenflanken 3, 3' verlaufende Übergangsrundungen 2a (Fig. 3) auf. Die Erhebung 4 weist einen im Wesentlichen zylindrischen Basisteil 5, vier vom Basisteil 5 strahlenförmig abragende und sich entlang des Rillengrundes 2 erstreckende schmale Stabilisierungsstege 6, 6', 7, 7' und zwischen den Stabilisierungsstegen 6, 6', 7, 7' entlang des Basisteils 5 verlaufende Stufen 8 auf.

Der Basisteil 5 weist einen Durchmesser d₁ (Fig. 4) von 4,0 mm bis 6,0 mm, insbesondere 5,0 mm, auf, seine Höhe h₁ (Fig. 3), welche ausgehend von der tiefsten Stelle des Rillengrundes 2 in radialer Richtung ermittelt wird, beträgt 3,0 mm bis 4,0 mm, insbesondere 3,5 mm. Der Basisteil 5 weist einen kuppelartig gestalteten Oberteil 9 mit einer kreisförmigen Deckfläche 9a auf, deren Durchmesser d₂ (Fig. 4) beispielsweise 2,5 mm beträgt.

Die Stabilisierungsstege 6, 6', 7, 7' sind am Basisteil 5 knapp unterhalb des Oberteiles 9 ausgebildet und jeweils etwa um 90 Grad gegeneinander versetzt, sodass die beiden Stabilisierungsstege 6, 6' sowie die beiden Stabilisierungsstege 7, 7' einander jeweils im Wesentlichen diametral gegenüberliegen. Wie insbesondere Fig. 4 zeigt, erstrecken sich die beiden Stabilisierungsstege 6, 6' vom Basisteil 5 entlang des Rillengrundes 2 in Draufsicht im Wesentlichen gerade und zur Umfangsrichtung des Laufstreifens unter einem Winkel α von bis zu 30°, insbesondere von 15° bis 25°, und weisen jeweils ein Länge l₁ von 1,5 mm bis 2,5 mm auf. Die Stabilisierungsstege 7, 7' verlaufen vom Basisteil 5 ausgehend entlang des Rillengrundes 2 in Draufsicht leicht bogenförmig, vorzugsweise entlang eines Kreisbogens, dessen Radis r₁ 6,0 mm bis 8,0 mm, insbesondere 7,5 mm, beträgt.

Bei der in Fig. 1 gezeigten Ausführungsvariante erstreckt sich der Stabilisierungssteg 7' bis zum radial inneren Bereich der Rillenflanke 3' und bindet derart die Erhebung 4 an diese Rillenflanke 3' an, der Stabilisierungssteg 7 endet in einem geringen Abstand vor der anderen Rillenflanke 3. Bei der in Fig. 2 gezeigten Ausführungsvariante ist der Stabilisierungssteg 7 an der Rillenflanke 3 angebunden.

Sämtliche Stabilisierungsstege 6, 6', 7, 7' weisen vorzugsweise im Wesentlichen übereinstimmende Querschnitte auf, insbesondere jeweils einen im Wesentlichen rechteckigen oder trapezförmigen, Querschnitt. Die Breite b₁ der Stabilisierungsstege 6, 6', 7, 7' am Rillengrund beträgt etwa 1,5 mm bis 2 mm.

Die bogenförmig entlang der Außenfläche des Basisteils 5 zwischen benachbarten Stabilisierungsstegen 6, 6', 7, 7' verlaufenden Stufen 8 weisen jeweils eine parallel zur Außenfläche des Laufstreifens verlaufende Stufenfläche 8a auf, deren Breite b₂ (Fig. 4) 0,5 mm bis 1,0 mm beträgt. Die Stufenfläche 8a befindet sich in radialer Richtung vorzugsweise in einer Höhe h₂ von der tiefsten Stelle des Rillengrundes, die der Mindestprofiltiefe von 1, 6 mm entspricht, sodass die Stufen 8 die Funktion von TWIs (Tread Wear Indikatoren) erfüllen.

Sämtliche Übergänge zwischen dem Basisteil 5, den Stabilisierungsstegen 6, 6', 7, 7 und den Stufen 8 sowie die Übergänge zu den Rillenflanken 3, 3' und zum Rillengrund 2 sind vorzugsweise gerundet ausgeführt.

### Bezugsziffernliste

- 1: Umfangsrille
- 2: Rillengrund
- 2a: Übergangsrundung
- 3. 3': Rillenflanke
- 4: Erhebung
- 5: Basisteil
- 6, 6', 7, 7': Stabilisierungssteg
- 8: Stufe
- 8a: Stufenfläche
- 9: Oberteil
- 9a: Deckfläche
- h₁, h₂: Höhe
- r₁: Radius
- d₁, d₂: Durchmesser
- l₁: Länge
- b₁, b₂: Breite
- α: Winkel

## Patentansprüche

1. Fahrzeugluftreifen mit einem Laufstreifen mit zumindest einer Profilpositive, wie Profilrippen oder Profilblockreihen, begrenzenden Umfangsrille (1), welche zwischen den Profilpositiven durch einen Rillengrund (2) und zwei einander gegenüberliegende Rillenflanken (3,3') begrenzt ist und auf deren Rillengrund (2) eine Anzahl von in Umfangsrichtung voneinander beabstandeten, als Schallbrecher wirkende Erhebungen (4) ausgebildet ist, wobei die Erhebungen (4) jeweils einen zumindest im Wesentlichen mittig am Rillengrund (2) positionierten zylindrischen Basisteil (5) aufweisen, **dadurch gekennzeichnet, dass** vom Basisteil (5) strahlenförmig vier Stabilisierungsstege (6, 6', 7, 7') entlang des Rillengrundes (2) verlaufen, wobei jeweils zwei Stabilisierungsstege (6, 6', 7, 7') einander diametral gegenüberliegen, und wobei die einen einander diametral gegenüberliegenden Stabilisierungsstege (6, 6') im Wesentlichen in der Umfangsrichtung der Umfangsrille (1) verlaufen und die anderen einander diametral gegenüberliegenden Stabilisierungsstege (7, 7') im Wesentlichen in axialer Richtung verlaufen und zumindest einer dieser im Wesentlichen in axialer Richtung verlaufenden Stabilisierungsstege (7, 7') bis zu einer Rillenflanke (3, 3') verläuft und mit dieser verbunden ist.

2. Fahrzeugluftreifen nach Anspruch 1, **dadurch gekennzeichnet, dass** die beiden im Wesentlichen in der Umfangsrichtung der Umfangsrille (1) verlaufenden Stabilisierungsstege (6, 6') unter einem Winkel (α) von bis zu 30°, vorzugsweise von 15° bis 25°, zur Umfangsrichtung verlaufen.

3. Fahrzeugluftreifen nach Anspruch 1 oder 2, **dadurch gekennzeichnet, dass** die beiden im Wesentlichen in der Umfangsrichtung der Umfangsrille (1) verlaufenden Stabilisierungsstege (6, 6') eine Erstreckungslänge (l₁) von 1,5 mm bis 2,5 mm aufweisen.

4. Fahrzeugluftreifen nach Anspruch 1, **dadurch gekennzeichnet, dass** die beiden im Wesentlichen in axialer Richtung verlaufenden Stabilisierungsstege (7, 7') entlang eines Kreisbogens mit einem Radius (r₁) von 6,0 mm bis 8,0 mm verlaufen.

5. Fahrzeugluftreifen nach Anspruch 1, **dadurch gekennzeichnet, dass** der Basisteil (5) einen kuppelartig gestalteten Oberteil (9) aufweist.

6. Fahrzeugluftreifen nach Anspruch 1 oder 5, **dadurch gekennzeichnet, dass** der Basisteil (5) einen Durchmesser (d₁) von 4,0 mm bis 6,0 mm aufweist.

7. Fahrzeugluftgreifen nach einem der Ansprüche 1, 5 oder 6, **dadurch gekennzeichnet, dass** der Basisteil (5) eine Höhe (h₁) von 3,0 mm bis 4,0 mm aufweist.

8. Fahrzeugluftreifen nach einem der Ansprüche 1 bis 7, **dadurch gekennzeichnet, dass** an der Außenseite des Basisteils (5) zwischen den im Wesentlichen in der Umfangsrichtung der Umfangsrille (1) und den im Wesentlichen in axialer Richtung verlaufenden Stabilisierungsstegen (6, 6', 7, 7') Stufen (8) mit Stufenflächen (8a) ausgebildet sind, die parallel zur Laufstreifenaußenfläche verlaufen und sich in einer Höhe (h₂), von der tiefsten Stelle des Rillengrundes (2) ermittelt, befinden, die der gesetzlichen Mindestprofiltiefe entspricht.

9. Fahrzeugluftreifen nach einem der Ansprüche 1 bis 8, **dadurch gekennzeichnet, dass** die Anzahl der Erhebungen (4) in jeder Umfangsrille (1) des Laufstreifens derart gewählt ist, dass sich pro Umfangsrille (1) innerhalb der Aufstandsfläche des Reifens in jeder Drehlage zumindest eine Erhebung (4) befindet.

10. Fahrzeugluftreifen nach einem der Ansprüche 1 bis 9, **dadurch gekennzeichnet, dass** die Anzahl der Erhebungen (4) in jeder Umfangsrille (1) des Laufstreifens zwölf bis zwanzig, insbesondere siebzehn, beträgt.

## Claims

1. Pneumatic vehicle tyre having a tread strip with at least one circumferential groove (1) which delimits positive profiles, such as profile ribs or tread bar rows, is delimited between the positive profiles by way of a groove bottom (2) and two groove flanks (3, 3') which lie opposite one another, and on the groove bottom (2) of which a number of elevations (4) which are spaced apart from one another in the circumferential direction and act as sound absorbers are configured, the elevations (4) having in each case one cylindrical base part (5) which is positioned at least substantially centrally on the groove bottom (2), **characterized in that** four stabilizing webs (6, 6', 7, 7') run along the groove bottom (2) in a star-shaped manner from the base part (5), in each case two stabilizing webs (6, 6', 7, 7') lying diametrically opposite one another, and the one pair of stabilizing webs (6, 6') which lie diametrically opposite one another running substantially in the circumferential direction of the circumferential groove, and the other stabilizing webs (7, 7') which lie diametrically opposite one another running substantially in the axial direction, and at least one of the said stabilizing webs (7, 7') which run substantially in the axial direction running as far as a groove flank (3, 3') and being connected to the latter.

2. Pneumatic vehicle tyre according to Claim 1, **characterized in that** the two stabilizing webs (6, 6') which run substantially in the circumferential direction of the circumferential groove (1) run at an angle (α) of up to 30°, preferably of from 15° to 25°, with respect to the circumferential direction.

3. Pneumatic vehicle tyre according to Claim 1 or 2, **characterized in that** the two stabilizing webs (6, 6') which run substantially in the circumferential direction of the circumferential groove (1) have an extent length (l₁) of from 1.5 mm to 2.5 mm.

4. Pneumatic vehicle tyre according to Claim 1, **characterized in that** the two stabilizing webs (7, 7') which run substantially in the axial direction run along a circular arc with a radius (r₁) of from 6.0 mm to 8.0 mm.

5. Pneumatic vehicle tyre according to Claim 1, **characterized in that** the base part (5) has an upper part (9) of dome-like design.

6. Pneumatic vehicle tyre according to Claim 1 or 5, **characterized in that** the base part (5) has a diameter (d₁) of from 4.0 mm to 6.0 mm.

7. Pneumatic vehicle tyre according to one of Claims 1, 5 or 6, **characterized in that** the base part (5) has a height (h₁) of from 3.0 mm to 4.0 mm.

8. Pneumatic vehicle tyre according to one of Claims 1 to 7, **characterized in that** steps (8) with step faces (8a) are configured on the outer side of the base part (5) between the stabilizing webs (6, 6') which run substantially in the circumferential direction of the circumferential groove (1) and the stabilizing webs (7, 7') which run substantially in the axial direction, which steps (8) run parallel to the tread strip outer face and are situated at a height (h₂), determined from the lowest point of the groove bottom (2), which height (h₂) corresponds to the minimum legal profile depth.

9. Pneumatic vehicle tyre according to one of Claims 1 to 8, **characterized in that** the number of elevations (4) in each circumferential groove (1) of the tread strip is selected in such a way that at least one elevation (4) is situated per circumferential groove (1) within the contact area of the tyre in every rotary position.

10. Pneumatic vehicle tyre according to one of Claims 1 to 9, **characterized in that** the number of elevations (4) in every circumferential groove (1) of the tread strip is from twelve to twenty, in particular seventeen.

## Revendications

1. Pneumatique de véhicule comprenant une bande de roulement pourvue d'au moins une rainure circonférentielle (1) qui délimite des éléments profilés en relief, tels que des nervures profilées ou des rangées de blocs profilés, qui est délimitée entre les éléments profilés en relief par un fond de rainure (2) et deux flancs de rainure (3, 3') opposés l'un à l'autre et sur le fond (2) de laquelle est formé un certain nombre d'élévations (4) qui sont espacées les unes des autres dans la direction circonférentielle et qui agissent comme des réfracteurs acoustiques, les élévations (4) comportant chacune une partie de base cylindrique (5) positionnée au moins sensiblement au centre sur le fond de rainure (2), **caractérisée en ce que** quatre nervures de stabilisation (6, 6', 7, 7') s'étendent depuis la partie de base (5) le long du fond de rainure (2), deux nervures de stabilisation (6, 6', 7, 7') étant à chaque fois diamétralement opposées, et les nervures de stabilisation diamétralement opposées (6, 6') s'étendant sensiblement dans la direction circonférentielle de la rainure circonférentielle (1) et les autres nervures de stabilisation diamétralement opposées (7, 7') s'étendant sensiblement dans la direction axiale et l'une au moins de ces nervures de stabilisation (7, 7') qui s'étendent dans la direction axiale s'étendant jusqu'à un flanc de rainure (3, 3') et étant reliée à celui-ci.

2. Pneumatique de véhicule selon la revendication 1, **caractérisé en ce que** les deux nervures de stabilisation (6, 6') qui s'étendent sensiblement dans la direction circonférentielle de la rainure circonférentielle (1) s'étendent selon un angle (α) pouvant atteindre 30°, de préférence allant de 15° à 25°, par rapport à la direction circonférentielle.

3. Pneumatique de véhicule selon la revendication 1 ou 2, **caractérisé en ce que** les deux nervures de stabilisation (6, 6') qui s'étendent sensiblement dans la direction circonférentielle de la rainure circonférentielle (1) ont une longueur d'extension (l₁) de 1,5 mm à 2,5 mm.

4. Pneumatique de véhicule selon la revendication 1, **caractérisé en ce que** les deux nervures de stabilisation (7, 7') qui s'étendent sensiblement dans la direction axiale s'étendent suivant un arc de cercle de rayon (r₁) de 6,0 mm à 8,0 mm.

5. Pneumatique de véhicule selon la revendication 1, **caractérisé en ce que** la partie de base (5) comporte une partie supérieure (9) en forme de dôme.

6. Pneumatique de véhicule selon la revendication 1 ou 5, **caractérisé en ce que** la partie de base (5) a un diamètre (d₁) de 4,0 mm à 6,0 mm.

7. Pneumatique de véhicule selon l'une des revendications 1, 5 ou 6, **caractérisé en ce que** la partie de base (5) a une hauteur (h₁) de 3,0 mm à 4,0 mm.

8. Pneumatique de véhicule selon l'une des revendications 1 à 7, **caractérisé en ce que** des gradins (8) pourvus de surfaces (8a) sont formés du côté extérieur de la partie de base (5) entre les nervures de stabilisation (6, 6', 7, 7') s'étendant sensiblement dans la direction circonférentielle de la rainure circonférentielle (1) et celles s'étendant sensiblement dans la direction axiale, s'étendent parallèlement à la surface extérieure de la bande de roulement et sont à une hauteur (h₂) du point le plus profond du fond de rainure (2) qui correspond à la profondeur d'élément profilé minimale légale.

9. Pneumatique de véhicule selon l'une des revendications 1 à 8, **caractérisé en ce que** le nombre d'élévations (4) dans chaque rainure circonférentielle (1) de la bande de roulement est choisi de telle sorte qu'il y ait au moins une élévation (4) par rainure circonférentielle (1) à l'intérieur de la surface de contact au sol du pneumatique dans toute position de rotation.

10. Pneumatique de véhicule selon l'une des revendications 1 à 9, **caractérisé en ce que** le nombre d'élévations (4) dans chaque rainure circonférentielle (1) de la bande de roulement est de douze à vingt, en particulier dix-sept.
